# FASCICULE DE BREVET EUROPEEN

(11) **EP 1 048 514 B1**
(45) Date de publication et mention de la délivrance du brevet: **06.10.2004**
(21) Numéro de dépôt: 00401151.6
(22) Date de dépôt: 26.04.2000
(51) Int. Cl.: B60N 2/46, B60R 7/04

(54) **Console pour un habitacle de véhicule automobile**
Konsole für einen Kraftfahrzeuginnenraum
Console for a motor vehicle interior

(30) Priorité: 26.04.1999 FR 9905265
(43) Date de publication de la demande: 02.11.2000
(73) Titulaire: ECIA INDUSTRIE, 92100 Boulogne (FR)
(72) Inventeur: Bannier, Christine, 25230 Seloncourt (FR); Bonnot, David, 25700 Valentigney (FR); Baume, Hugues, 25200 Montbelliard (FR); Vannelli, Frédéric, 25490 Fesches le Chatel (FR)
(74) Mandataire: Jacobson, Claude

(56) Documents cités:
- WO-A-98/06599
- DE-A- 4 415 732
- DE-C- 19 615 743
- DE-U- 29 619 477
- JP-A- 4 037 237
- JP-A- 6 107 072
- JP-A- 9 150 677
- US-A- 4 685 729
- US-A- 5 752 740

## Description

La présente invention concerne une console pour un habitacle de véhicule automobile.

On connaît déjà dans l'état de la technique une console pour un habitacle de véhicule automobile, du type s'étendant longitudinalement à proximité d'au moins un siège du véhicule et comprenant un réceptacle obturable par un couvercle, articulé sur la console, formant un accoudoir pour un occupant du siège (p. ex. DE-C-196 15 743).

Habituellement, la console s'étend entre deux sièges avant de l'habitacle, le couvercle formant accoudoir étant articulé autour d'un axe sensiblement transversal à la console et lié à cette console.

Généralement, le couvercle formant accoudoir est articulé par son extrémité arrière sur la console et s'ouvre en soulevant son extrémité avant vers l'arrière du véhicule. Cette cinématique du couvercle a pour inconvénient de gêner l'accès au réceptacle par des passagers assis à l'arrière de la console, sur des sièges arrière de l'habitacle.

L'invention a pour but de faciliter l'accès au réceptacle de la console, généralement disposée entre les sièges avant de l'habitacle, par des passagers assis sur des sièges arrière de cet habitacle.

A cet effet, l'invention a pour objet une console pour un habitacle de véhicule automobile, du type précité, caractérisée en ce qu'elle comporte un corps fixe et un tiroir dans lequel est agencé le réceptacle, ce tiroir étant monté déplaçable sensiblement longitudinalement dans le corps fixe entre une position fermée, dans laquelle le réceptacle n'est accessible que par ouverture du couvercle, et une position ouverte, dans laquelle le réceptacle est directement accessible de l'extérieur de la console indépendamment de l'ouverture ou non du couvercle, et en ce que le corps fixe comprend une ouverture, obturable par le couvercle, formant un accès au réceptacle lorsque le tiroir est en position fermée, la console comprenant de plus un rideau, entraîné par le tiroir, destiné à masquer cette ouverture lorsque le tiroir est déplacé vers sa position ouverte.

Suivant d'autres caractéristiques de cette console :
- le tiroir comprend une extrémité externe au corps fixe, notamment pour la manoeuvre de ce tiroir, et une extrémité interne au corps ;
- le rideau est relié à l'extrémité interne du tiroir ;
- l'extrémité externe du tiroir forme une extrémité arrière de la console en considérant les orientations habituelles d'un conducteur du véhicule.

L'invention a également pour objet un véhicule automobile caractérisé en ce qu'il est muni d'une console telle que définie ci-dessus.

L'invention sera mieux comprise à la lecture de la description qui va suivre donnée uniquement à titre d'exemple et faite en se référant aux dessins dans lesquels :
- les figures 1 à 6 sont des vues en perspective d'une console selon l'invention, dans différentes configurations d'utilisation ;
- les figures 7 à 10 sont des vues en coupe suivant la ligne 7-7 de la figure 1, montrant la console dans différentes configurations d'utilisation ;
- la figure 11 est une vue de détail, en perspective, de la partie cerclée 11 de la figure 10.

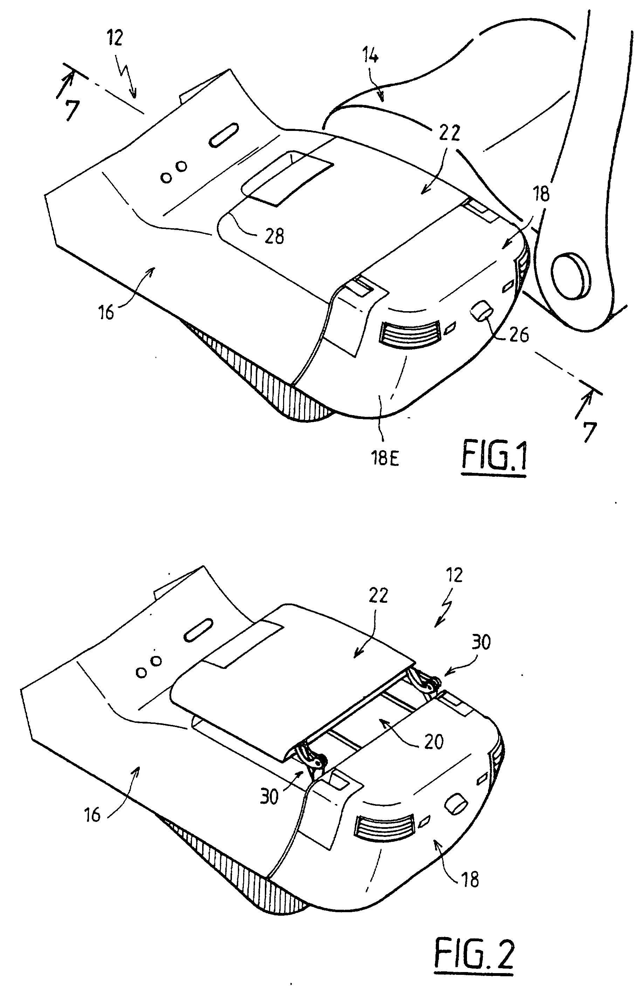

On a représenté sur les figures 1 à 10 une console 12 selon l'invention pour un habitacle de véhicule automobile. Dans ce qui suit, les orientations avant, arrière, gauche, droite, inférieure et supérieure sont considérées par rapport aux orientations habituelles d'un conducteur du véhicule.

La console 12 s'étend longitudinalement entre deux sièges avant 14 du véhicule dont un seul est représenté sur la figure 1.

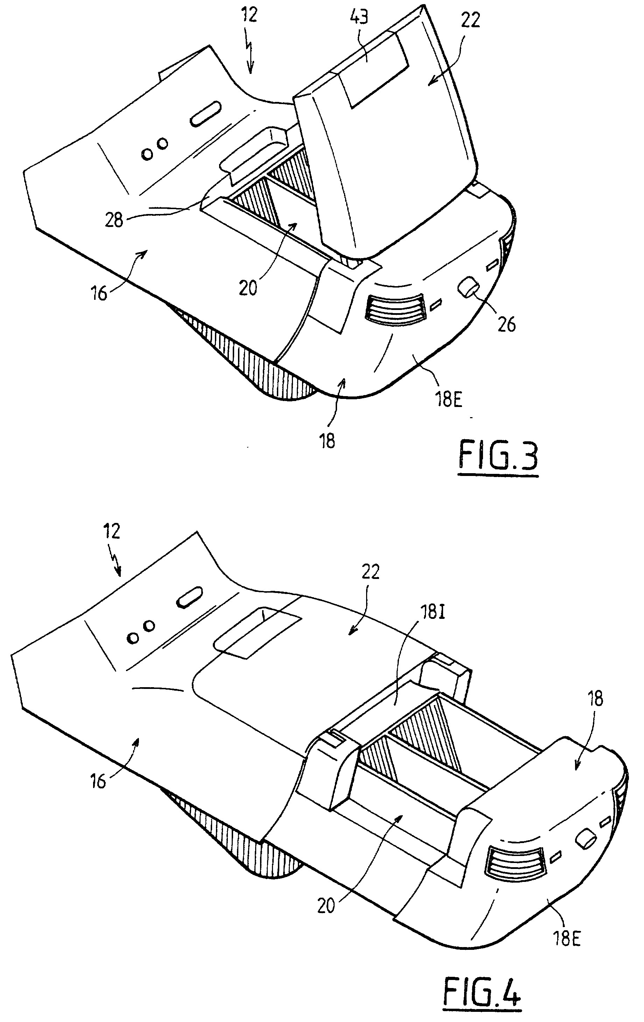

La console 12 comporte un corps fixe 16 dans lequel un tiroir 18 est monté coulissant sensiblement longitudinalement. Un réceptacle 20 est agencé dans le tiroir 18 (voir notamment figures 3 à 6). Ce réceptacle 20 est obturable par un couvercle 22, articulé sur la console 12 par des moyens qui seront décrits ultérieurement. Le réceptacle 20 comporte un ou plusieurs compartiments formant, par exemple, un cendrier ou un vide-poches.

Le couvercle 22 forme, lorsqu'il est dans une position sensiblement horizontale, un accoudoir pour les occupants des sièges 14.

Le tiroir 18 est déplaçable entre une position fermée telle que représentée sur les figures 1 à 3, dans laquelle le réceptacle 20 n'est accessible que par ouverture du couvercle 22, et une position ouverte telle que représentée sur les figures 4 à 6, dans laquelle le réceptacle 20 est directement accessible de l'extérieur de la console 12, indépendamment de l'ouverture ou non du couvercle 22.

Le tiroir 18 comporte une extrémité 18E, externe au corps 16, formant une extrémité arrière de la console 12, et une extrémité 181, interne au corps 16, à laquelle est relié un rideau 24 souple ou pliable.

Le tiroir 18 peut être manoeuvré manuellement, en saisissant son extrémité externe 18E, ou bien à l'aide de moyens classiques motorisés. L'extrémité externe 18E du tiroir peut éventuellement porter un bouton 26 de commande de moyens de verrouillage de ce tiroir en position fermée.

Le corps 16 comporte une ouverture 28, obturable par le couvercle 22, formant un accès au réceptacle 20 lorsque le tiroir 18 est en position fermée, comme cela est représenté sur la figure 3.

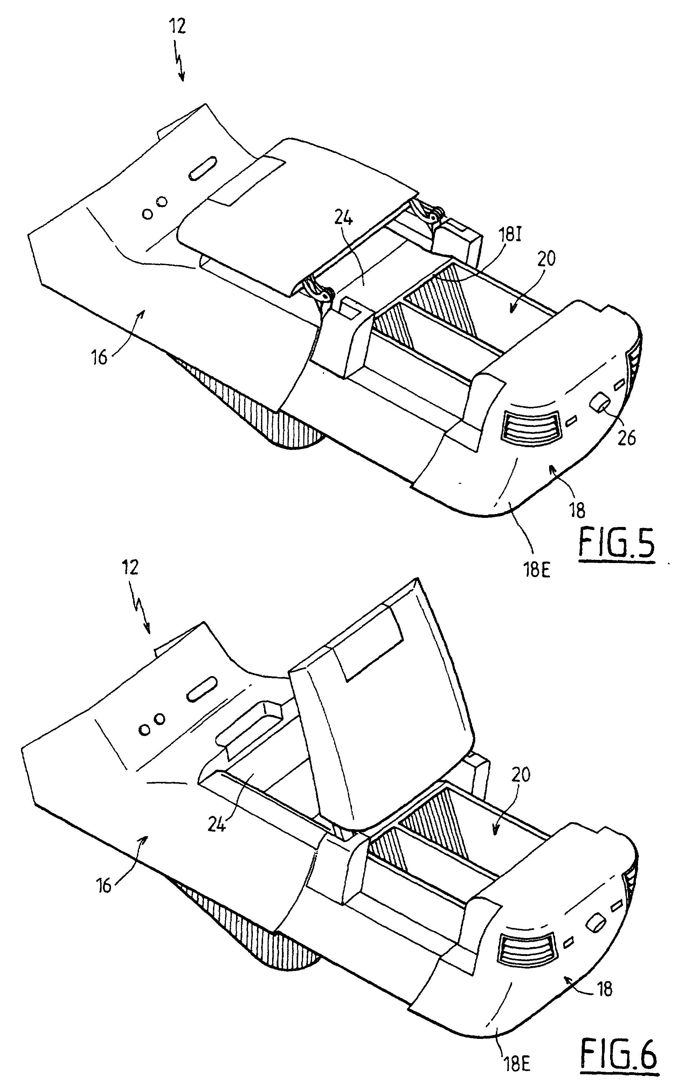

Lorsque le tiroir 18 est déplacé depuis sa position fermée, telle que représentée notamment sur la figure 1, jusqu'à sa position ouverte, telle que représentée notamment sur la figure 5, le rideau 24, entraîné par ce tiroir 18, est guidé dans le corps 16 de façon à se déployer et masquer l'ouverture 28, comme cela est représenté sur les figures 5 et 6.

On notera que le corps fixe 16 de la console peut-être, soit rapporté sur le plancher du véhicule, soit venu de matière avec ce plancher.

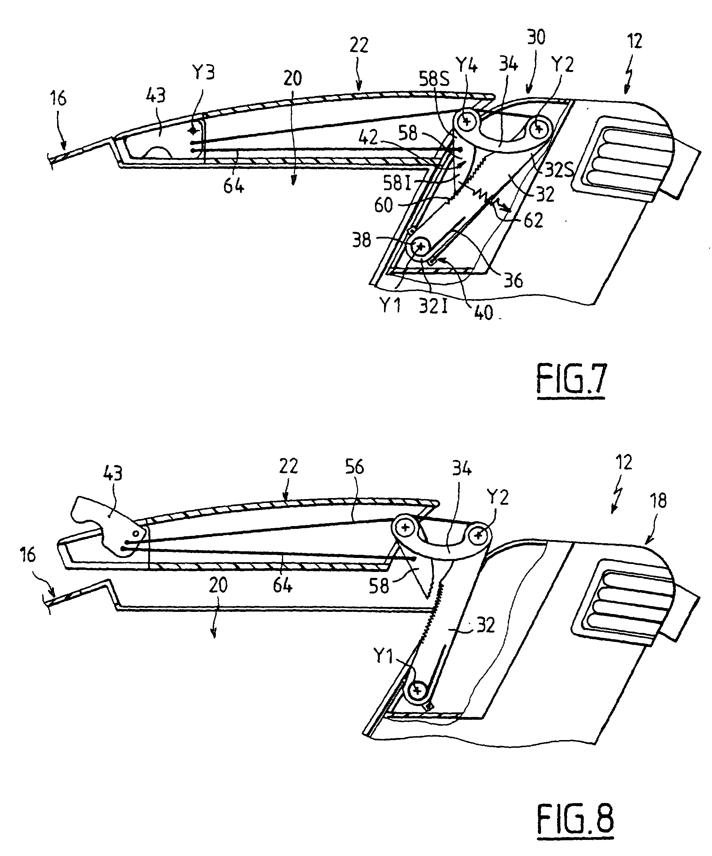

Le couvercle 22, formant accoudoir, peut-être réglé en hauteur à l'aide de moyens tels que ceux représentés sur les figures 7 à 11.

Les moyens de réglage en hauteur comprennent deux dispositifs 30 similaires reliant, respectivement, des côtés gauche et droit du couvercle 22 avec le corps 16. Dans ce qui suit, on ne décrira que le dispositif de réglage droit 30 représenté sur les figures 7 à 11. Bien entendu, en variante, les moyens de réglage en hauteur du couvercle 22 peuvent ne comporter qu'un seul dispositif 30 agencé sensiblement au milieu de ce couvercle.

Le dispositif de réglage 30 comprend une bielle 32 munie d'une extrémité inférieure 32I articulée autour d'un axe fixe Y1, lié au corps 16, sensiblement transversal à la console 12, et d'une extrémité supérieure 32S sur laquelle est articulé, autour d'un axe mobile Y2 sensiblement parallèle à l'axe Y1, un bras 34 solidaire du couvercle 22. Ce bras 34 prolonge l'extrémité arrière du couvercle 22.

La bielle 32 est rappelée élastiquement vers l'avant de la console 12, dans un sens de soulèvement de son extrémité supérieure 32S, au moyen d'un ressort 36 à effet angulaire accroché entre la bielle 32 et une broche fixe 38 matérialisant l'axe Y1. L'extrémité inférieure 32I de la bielle est libre en rotation autour de la broche 38.

Le dispositif de réglage 30 comprend également des premiers moyens libérables 40 de blocage en rotation de la bielle 32 par rapport à l'axe Y1, et des seconds moyens libérables 42 de blocage en rotation du bras 34 et du couvercle 22 par rapport à l'axe Y2. Ces premiers et seconds moyens de blocage 40, 42 sont libérés à l'aide d'un levier de commande commun 43 articulé sur l'extrémité avant du couvercle 22, autour d'un axe Y3 sensiblement transversal à la console.

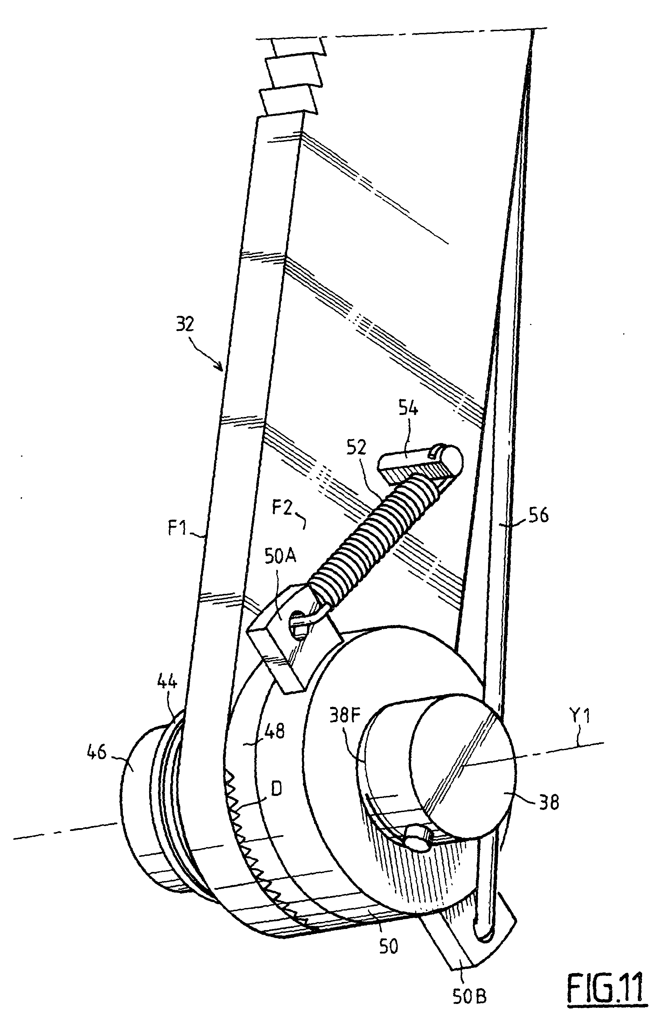

Les premiers moyens de blocage 40, représentés plus en détail sur la figure 11, comprennent un dispositif de serrage de deux faces opposées F1, F2 de la bielle 32. Dans l'exemple illustré, ce dispositif de serrage comprend un ressort 44, formant un organe d'appui fixe, entourant la broche 38, intercalé entre une tête d'appui fixe 46 de cette broche et une première face F1 de la bielle 32. Le dispositif de serrage comprend également une rondelle de friction 48, montée déplaçable axialement sur la broche 38, munie d'une denture de friction D destinée à coopérer avec la seconde face F2 de la bielle.

Cette rondelle de friction 48 est sollicitée contre la seconde face F2 de la bielle par une rondelle de poussée 50 coopérant par vissage avec une extrémité filetée 38F de la broche.

La rondelle de poussée 50 est rappelée élastiquement vers une position de serrage de l'organe de friction 48 contre la bielle 32 par un ressort de traction 52 accroché entre un doigt 54, solidaire de la bielle, et une première aile 50A de cette rondelle de poussée 50. Par ailleurs, la rondelle 50 est sollicitée à l'encontre de la force de rappel du ressort 52, vers une position de desserrage de la rondelle de friction 48 et donc de libération des premiers moyens de blocage, par un câble 56 ou une tringlerie reliant le levier 43 à une seconde aile 50B de cette rondelle de poussée 50, diamétralement opposée à la première aile 50A.

Les seconds moyens de blocage 42 comprennent un cliquet 58 muni d'une extrémité supérieure 58S articulée sur le couvercle 22, autour d'un axe Y4 sensiblement transversal à la console, et d'une extrémité inférieure dentée 58I d'assujettissement à une denture complémentaire 60 ménagée sur la bielle 32 entre les deux extrémités 32S, 32I de cette bielle 32.

Le cliquet 58 est rappelé élastiquement en position d'assujettissement à la denture 60 par des moyens classiques, tel qu'un ressort 62 schématisé sur la figure 7. Par ailleurs, le cliquet 58 est sollicité à l'encontre de la force de rappel du ressort 62, vers une position de libération des seconds moyens de blocage, par un câble 64 ou une tringlerie reliant ce cliquet 58 au levier de commande 43.

On décrira ci-dessous les principales étapes de fonctionnement de la console 12 selon l'invention.

Initialement, le tiroir 18 et le couvercle 22 de la console sont dans leur position fermée. Le couvercle 22 est dans une position sensiblement horizontale.

Lorsqu'un utilisateur assis dans l'un des deux sièges avant 14 souhaite accéder au réceptacle 20, il ouvre le couvercle 22 en le faisant pivoter d'environ 90° vers l'arrière autour de l'axe mobile Y2, comme cela est représenté sur la figure 3. Le couvercle 22 est alors dans une position sensiblement verticale.

On notera que lorsque le couvercle 22 est dans sa position ouverte sensiblement verticale, telle que représentée sur la figure 3, il forme un obstacle entre l'ouverture 28 d'accès au réceptacle 20 et les places arrière de l'habitacle.

De ce fait, lorsqu'un utilisateur assis sur un siège arrière de l'habitacle (disposé à l'arrière des sièges avant 14) souhaite accéder au réceptacle 20, il tire le tiroir 18 vers l'arrière, comme cela est représenté sur les figures 4 et 6. Le réceptacle 20 est alors accessible de l'extérieur de la console, indépendamment de la fermeture (figure 4) ou de l'ouverture (figure 6) du couvercle 22.

Lorsque le tiroir 18 et le couvercle 22 sont tous les deux dans leur position ouverte, comme cela est représenté sur la figure 6, l'espace dégagé par le tiroir 18, à l'aplomb de l'ouverture 28, est masqué par le rideau 24 qui a été déployé par le mouvement d'ouverture du tiroir 18.

On notera donc que les passagers assis à l'arrière de l'habitacle, c'est-à-dire derrière les sièges avant 14 situés de part et d'autre de la console 12, peuvent avoir facilement accès au réceptacle 20, grâce au tiroir 18.

On se réfère maintenant plus particulièrement aux figures 7 à 10 pour décrire les principales étapes de réglage en hauteur du couvercle 22 formant accoudoir.

Initialement, le couvercle 22 est dans sa position fermée de hauteur minimale, telle que représentée sur la figure 7 ou la figure 1. Le levier de commande 43 est dans une position de repos vers laquelle il est rappelé élastiquement par les ressorts 52 et 62 par l'intermédiaire des câbles 56 et 64. Le cliquet 58 est assujetti à la denture 60 de la bielle.

Pour modifier la hauteur du couvercle 22 formant accoudoir, l'utilisateur assis dans l'un des sièges avant 14, soulève le levier de commande 43 vers une position active telle que représentée sur la figure 8. Ceci a pour effet de solliciter les câbles 56, 64 de manière à libérer les premiers et seconds moyens de blocage 40, 42. La bielle 32 pivote alors autour de l'axe fixe Y1, vers l'avant de la console 12, sous l'effet de la force de rappel du ressort 36. Entraîné par la bielle 32, le couvercle 22 se déplace en combinant un mouvement vertical (vers le haut, dans l'exemple décrit) et un mouvement longitudinal (vers l'avant de la console, dans l'exemple décrit). Au cours de ce déplacement, le bras 34, solidaire du couvercle 22, pivote autour de l'axe mobile Y2 par rapport à la bielle 32.

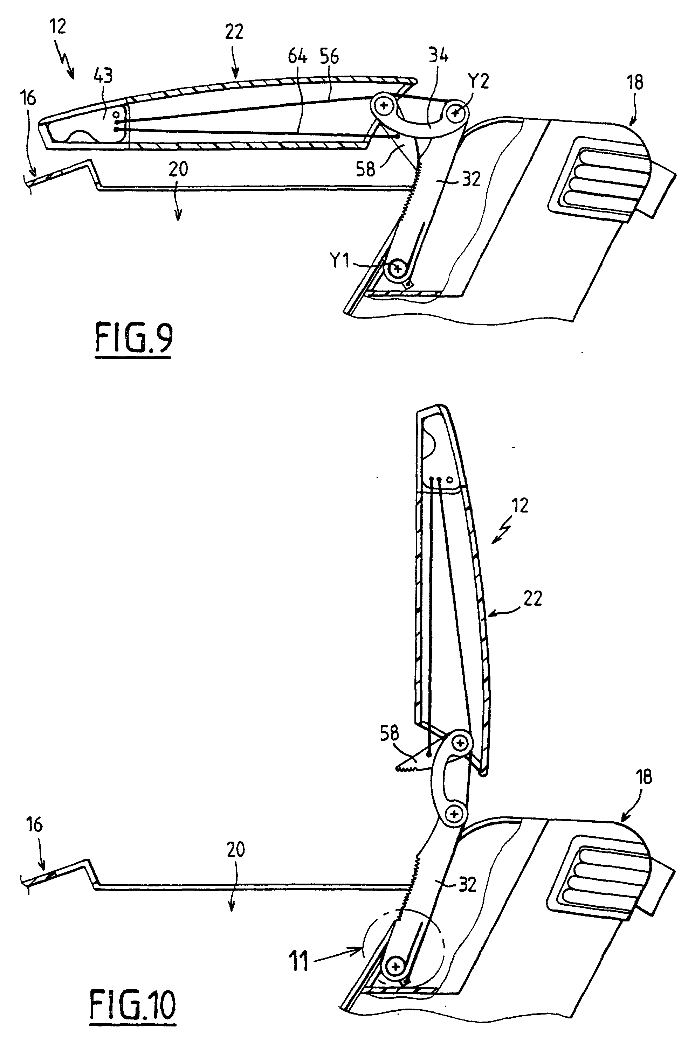

Une fois que la hauteur souhaitée du couvercle 22 est atteinte, l'utilisateur relâche le levier de commande 43 ce qui a pour effet d'activer à nouveau les premiers et seconds moyens de blocage 40, 42 et par conséquent d'immobiliser la bielle 32 et le couvercle 22 dans la position souhaitée, comme cela est représenté sur la figure 9. On notera que dans cette position du couvercle 22, le tiroir 18 peut être déplacé de sa position fermée, vers sa position ouverte, comme cela est représenté sur les figures 2 et 5.

Si, partant de la position du couvercle 22 représentée sur la figure 9, l'utilisateur souhaite accéder au réceptacle 20, il fait pivoter ce couvercle 22 autour de l'axe mobile Y2, vers l'arrière de la console, comme cela est représenté sur la figure 10. L'ouverture du couvercle 22 a cependant pour effet de libérer les premiers et seconds moyens de blocage 40, 42 si bien que la position de réglage en hauteur du couvercle n'est généralement pas conservée après ouverture de ce couvercle.

Pour déplacer le couvercle 22 formant accoudoir depuis sa position haute représentée sur la figure 9 vers sa position basse représentée sur la figure 7, l'utilisateur procède de façon similaire à ce qui a été décrit ci-dessus, en actionnant le levier de commande 43 et en appuyant sur le couvercle 22 vers le bas de façon à vaincre la force de rappel du ressort 36 exercée sur la bielle 32 afin de faire tourner cette bielle autour de l'axe fixe Y1, vers l'arrière de la console.

On notera qu'au cours du réglage en hauteur du couvercle 22, l'utilisateur, saisissant le levier 43 disposé à l'extrémité avant du couvercle, maintient ce dernier dans une position sensiblement horizontale.

L'invention ne se limite pas au mode de réalisation décrit. En particulier les moyens de réglage en hauteur du couvercle 22 peuvent être supprimés, le couvercle étant articulé dans ce cas autour d'un axe fixe lié au corps 16 de la console.

## Revendications

1. Console pour un habitacle de véhicule automobile, du type s'étendant longitudinalement à proximité d'au moins un siège (14) du véhicule et comprenant un réceptacle (20) obturable par un couvercle (22), articulé sur la console (12), formant un accoudoir pour un occupant du siège, **caractérisée en ce qu'**elle comporte un corps fixe (16) et un tiroir (18) dans lequel est agencé le réceptacle (20), ce tiroir étant monté déplaçable sensiblement longitudinalement dans le corps fixe (16) entre une position fermée, dans laquelle le réceptacle (20) n'est accessible que par ouverture du couvercle (22), et une position ouverte, dans laquelle le réceptacle (20) est directement accessible de l'extérieur de la console (12) indépendamment de l'ouverture ou non du couvercle (22), et **en ce que** le corps fixe (16) comprend une ouverture (28), obturable par le couvercle (22), formant un accès au réceptacle (20) lorsque le tiroir (18) est en position fermée, la console comprenant de plus un rideau (24), entraîné par le tiroir (18), destiné à masquer cette ouverture (28) lorsque le tiroir (18) est déplacé vers sa position ouverte.

2. Console selon la revendication 1, **caractérisée en ce que** le tiroir (18) comprend une extrémité (18E) externe au corps fixe (16), notamment pour la manoeuvre de ce tiroir (18), et une extrémité (18I) interne au corps (16).

3. Console selon les revendications 1 et 2 prises ensemble, **caractérisée en ce que** le rideau (24) est relié à l'extrémité interne (18I) du tiroir.

4. Console selon la revendication 2 ou 3, **caractérisée en ce que** l'extrémité externe (18E) du tiroir forme une extrémité arrière de la console en considérant les orientations habituelles d'un conducteur du véhicule.

5. Véhicule automobile **caractérisé en ce qu'**il est muni d'une console selon l'une quelconque des revendications précédentes.

## Patentansprüche

1. Konsole für eine Kraftfahrzeug-Fahrgastzelle des Typs, der in Längsrichtung in der Nähe wenigstens eines Sitzes (14) des Fahrzeugs verläuft und einen Aufnahmeraum (20) aufweist, der durch einen Deckel (22) verschließbar ist, der an der Konsole (12) angelenkt ist und eine Armlehne für eine den Sitz belegende Person bildet, **dadurch gekennzeichnet**, das sie einen festen Körper (16) und eine Schublade (18), in der der Aufnahmeraum (20) angeordnet ist, umfasst, wobei diese Schublade so angebracht ist, dass sie in dem festen Körper (16) im Wesentlichen in Längsrichtung zwischen einer geschlossenen Position, in der der Aufnahmeraum (20) nur durch Öffnen des Deckels (22) zugänglich ist, und einer offenen Position, in der der Aufnahmeraum (20) von außerhalb der Konsole (12) unabhängig davon, ob der Deckel (22) geöffnet ist, zugänglich ist, verlagerbar ist, und dass der feste Körper (16) eine Öffnung (28) umfasst, die durch den Deckel (22) verschließbar ist und einen Zugang zu dem Aufnahmeraum (20) bildet, wenn die Schublade (18) in der geschlossenen Position ist, wobei die Konsole darüber hinaus eine durch die Schublade (18) mitgenommene Abdeckung (24) umfasst, die dazu bestimmt ist, diese Öffnung (28) zu verdecken, wenn die Schublade (18) in ihre geöffnete Position verlagert ist.

2. Konsole nach Anspruch 1, **dadurch gekennzeichnet, dass** die Schublade (18) ein außerhalb des festen Körpers (16) befindliches Ende (18E), das insbesondere der Handhabung dieser Schublade (18) dient, und ein innerhalb des Körpers (16) befindliches Ende (181) besitzt.

3. Konsole nach Anspruch 1 und 2, **dadurch gekennzeichnet, dass** die Abdeckung (24) mit dem inneren Ende (18I) der Schublade verbunden ist.

4. Konsole nach Anspruch 2 oder 3, **dadurch gekennzeichnet, dass** das äußere Ende (18E) der Schublade in Bezug auf die üblichen Orientierungen eines Fahrers des Fahrzeugs ein hinteres Ende der Konsole bildet.

5. Kraftfahrzeug, das mit einer Konsole nach einem der vorhergehenden Ansprüche versehen ist.

## Claims

1. Console for a motor-vehicle interior, of the type which extends longitudinally in the vicinity of at least one seat (14) of the vehicle and comprises a receptacle (20) which can be closed by a cover (22) which is articulated to the console (12) forming an armrest for an occupant of the seat, **characterized in that** it comprises a fixed body (16) and a drawer (18) in which the receptacle (20) is disposed, the drawer being mounted so as to be movable substantially longitudinally in the fixed body (16) between a closed position in which the receptacle (20) is accessible only by opening the cover (22), and an open position in which the receptacle (20) is accessible directly from outside the console (12), irrespective of whether or not the cover (22) is open, and **in that** the fixed body (16) comprises an opening (28) which can be closed by the cover (22), forming an access to the receptacle (20) when the drawer (28) is in the closed position, the console further comprising a screen (24) which is pulled along by the drawer (18) and is intended to mask the opening (28) when the drawer (18) is moved towards its open position.

2. Console according to Claim 1, **characterized in that** the drawer (18) comprises an end (18E) which is outside the fixed body (16), particularly for the operation of the drawer (18), and an end (18I) which is inside the body (16).

3. Console according to Claims 1 and 2 taken together, **characterized in that** the screen (24) is connected to the inside end (18I) of the drawer.

4. Console according to Claim 2 or Claim 3, **characterized in that** the outside end (18E) of the drawer forms a rear end of the console, with respect to the normal orientation of a driver of the vehicle.

5. A motor vehicle, **characterized in that** it is provided with a console according to any one of the preceding claims.
